**Europäisches Patentamt**

**European Patent Office**

**Office européen des brevets**

(19)

(11) Veröffentlichungsnummer: **0 114 213**
**B1**

(12) # EUROPÄISCHE PATENTSCHRIFT

(45) Veröffentlichungstag der Patentschrift:
03.02.88

(51) Int. Cl.⁴: **H 02 G 3/04, H 02 G 9/06**

(21) Anmeldenummer: **83111001.0**

(22) Anmeldetag: **04.11.83**

(54) **Hüllwellrohr.**

(30) Priorität: **16.12.82 DE 3246594**

(43) Veröffentlichungstag der Anmeldung:
**01.08.84 Patentblatt 84/31**

(45) Bekanntmachung des Hinweises auf die Patenterteilung:
**03.02.88 Patentblatt 88/5**

(84) Benannte Vertragsstaaten:
**AT BE CH DE FR GB IT LI NL SE**

(56) Entgegenhaltungen:
**CH-A-609 177**
**DE-A-2 102 420**
**FR-A-2 306 552**
**US-A-3 517 702**

(73) Patentinhaber: **Hegler, Wilhelm, Goethestrasse 2,
D-8730 Bad Kissingen (DE)**

(72) Erfinder: **Hegler, Wilhelm, Goethestrasse 2, D-8730
Bad Kissingen (DE)**
Erfinder: **Hegler, Ralph- Peter, Dipl.- Ing.,
Goethestrasse 2, D-8730 Bad Kissingen (DE)**

(74) Vertreter: **Rau, Manfred, Dr. Dipl.- Ing., Rau &
Schneck, Patentanwälte Königstrasse 2, D-8500
Nürnberg 1 (DE)**

EP 0 114 213 B1

## Beschreibung

Das technische Gebiet des Erfindung richtet sich auf ein Hüllwellrohr nach dem Oberbegriff von Anspruch 1.

Hüllwellrohre aus Kunststoff sind als solche seit langem bekannt (z. B. aus der DE-C-1 218 574) und werden zu Zwecken der Elektroinstallation in unterschiedlichster Weise, z. B. im Haus oder für unter der Erde verlegte Freileitungen mit Erfolg eingesetzt. Es ist auch an sich bekannt, solche Hüllwellrohre mit einem seitlichen Längsschlitz zu versehen, um damit festverlegte Kabelabschnitte umgeben zu können oder Reparaturen an beschädigten Wellrohrabschnitten durchführen zu können.

Aus der DE-A-31 00 944 ist ein flexibles Schutzrohr mit seitlichem Längsschlitz bekannt, welches insbesondere für Reparaturen konzipiert ist. Dieses Schutzrohr soll eine möglichst große Biegeelastizität aufweisen und ist deshalb auch quer zur Längsachse mit Schlitzen versehen. Dies macht es allerdings erforderlich nach der Installation das flexible Rohr mit einem selbstverschleißenden Klebeband oder dergleichen zu umwickeln, um die gewünschte Wasser- und Gasdichtigkeit zu erzielen.

Aus der US-A-3 517 702 ist ein Hüllrohr mit einem Schnappverschluß bekannt. Dieses Hüllrohr ist nicht als Wellrohr ausgebildet, so daß sich bei diesem nicht die herstellungstechnischen Probleme ergeben, wie sie bei der Wellrohr-Herstellung gegeben sind. Insbesondere könnte ein Schnappverschluß gemäß dieser Druckschrift nicht in einer aus zwei Hälften zusammengesetzten Form hergestellt werden.

Die CH-A-609 177 betrifft einen Installationskanal für elektrische Leitungen. Auch ein derartiger Installationskanal ist nicht mit Wellen versehen, so daß die Ausbildung des Schnappverschlusses ohne Berücksichtigung der spezifischen Wellrohr-Herstellungstechnik erfolgen kann.

Aus der FR-A-2 306 552 ist ein Rohr mit einem im Querschnitt rechteckigen Grundkörper bekannt, auf welchen ein im wesentlichen ebener Deckel aufgesetzt wird. Bei einer derartigen Geometrie treten nicht radiale und tangentiale Kräfte auf, welche aufgefangen werden müssen, wobei ein solcher Kabelkanal mit rechteckigem Querschnitt zudem von Haus aus nicht für solche Anwendungszwecke eingesetzt werden kann, wo größere Drucke von Außen aufgefangen werden müssen.

Ein gattungsgemäßes Hüllwellrohr ist aus der DE-A-2 102 420 bekannt.

Der Erfindung liegt die Aufgabe zugrunde, ein Hüllwellrohr der gattungsgemäßen Art so auszugestalten, daß die Herstellung des Rohres und die Einbringung der Längsschlitze problemlos in einem Arbeitsgang vorgenommen werden kann, wobei trotz einer herstellungstechnisch einfach beherrschbaren Konfiguration für das Verschlußprofil eine hohe Rastsicherheit und Dichtqualität erzielt werden soll.

Diese Aufgabe wird gelöst gemäß dem kennzeichnenden Teil von Anspruch 1. Durch die danach vorgesehene Ausgestaltung des Profils entsteht durch die Einbringung eines einzigen Längsschlitzes, der für das Auftrennen des Rohres ohnehin erforderlich ist, eine Rastausnehmung-Rastvorsprung-Konfiguration aus der V-förmigen Längsausnehmung, wobei durch die stärkere Ausbildung der äußeren Seitenwand der Rastausnehmung erreicht wird, daß diese sich relativ steif verhält und ein Widerlager gegen den dünnwandigeren und dementsprechend elastischeren Rastvorsprung bildet. Hierdurch werden definierte Rastverhältnisse beim mechanischen Verschließen des Schlitzes erreicht.

Darüber hinaus macht es diese Ausgestaltung des Schnappverschlusses möglich, die Wellenkonfiguration und den Schnappverschluß in einem einzigen Formvorgang herzustellen, wobei das Profil des Schnappverschlusses trotzdem so gestaltet ist, daß ein sicherer, dichter Verschluß des Hüllwellrohres gewährleistet ist. Das Wellrohr kann dabei unter Anwendung bewährter Herstellungstechniken dadurch gebildet werden, daß ein frisch extrudierter, noch warmplastischer Schlauch zur Erzeugung der Wellen in eine Form eingebracht wird, welche aus zwei Gruppen jeweils miteinander verbundener umlaufender Kokillen gebildet ist, wobei sich die Kokillen der beiden Gruppen jeweils zu einer geschlossenen, den Schlauch umgebenden Form ergänzen. Die erfindungsgemäße Verschlußkonfiguration macht hierbei eine problemlose Entformung möglich.

Durch das gemäß Anspruch 2 vorgesehene Versetzen des Längsschlitzes wird an der Rastnase ein spitzer Winkel erzielt, so daß beim Einrasten sichergesellt ist, daß die Rastnase sicher in der Hinterschneidung zu liegen kommt. Gleichzeitig fällt hierdurch der Winkel zwischen Schnittfläche und Wandinnenseite verhältnismäßig stumpf aus, so daß beim Entlangschleifen dieses Schlitzbereiches an dem zu umhüllenden Kabel eine Beschädigung funktionswesentlicher Teile weitgehend vermieden wird. Die nach Anspruch 3 vorgesehene, im Querschnitt U-förmige Längsausbauchung schafft einen gewissen Elastizitätsspielraum für den Rastvorsprung und ermöglicht ein Übergreifen der durch die Rastausnehmung und die parallele Längsausnehmung gebildeten Erhöhung unter Ausgleich von Herstellungstoleranzen, so daß in jedem Fall ein sicheres Einrasten des Rastvorsprungs in Rastausnehmung möglich ist.

Nachfolgend wird ein bevorzugtes Ausführungsbeispiel anhand der Zeichnung näher beschrieben. Dabei zeigen:

Fig. 1 eine Aufsicht eines Abschnitts eines erfindungsgemäßen Hüllwellrohrs, teilweise aufgebrochen, der Linie I-I;

Fig. 2 einen Querschnitt durch ein Wellental entsprechend der Linie II-II in Fig. 1;

Fig. 3 eine Fig. 2 entsprechende, aufgeweitete Darstellung mit einem elektrischen Kabel in Einführstellung;

Fig. 4 eine Fig. 2 entsprechende, ausschnittsweise vergrößerte Schnittdarstellung der Rasteinrichtung vor dem Einrasten;

Fig. 5 eine Fig. 4 entsprechende Darstellung nach dem Einrasten; und

Fig. 6 eine Fig. 2 entsprechende Darstellung nach dem Einrasten mit eingeschlossenem Kabel.

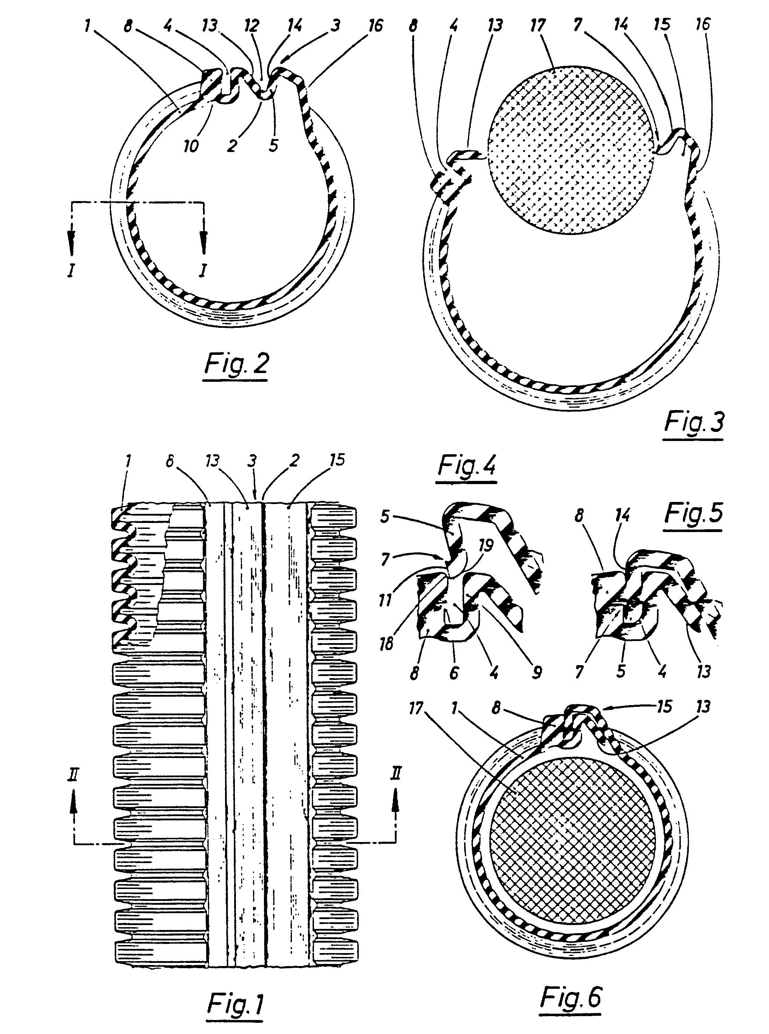

In Fig. 1 ist ein Hüllwellrohr dargestellt, welches aufeinanderfolgend jeweils nutartige Täler und ringartige Vorsprünge aufweist. Derartige Hüllwellrohre können nach einem Verfahren und mit einer Vorrichtung hergestellt werden, wie sie z. B. aus der DE-OS-31 18 932 bekannt sind. Wie aus dem aufgebrochenen Teil der Darstellung ersichtlich ist, weist die Wandung 1 eine durchgehend weitgehend gleichmäßige Stärke auf. Bei hoher Beanspruchbarkeit wird hierdurch eine große Flexibilität erreicht.

Von bekannten derartigen Hüllwellrohren hebt sich das erfindungsgemäße dadurch ab, daß ein Längsschlitz 2 vorgesehen ist, an dessen beiden Seiten eine Rast- bzw. Schnappverschlußeinrichtung 3 angeordnet ist. Diese umfaßt im wesentlichen eine in Längsrichtung verlaufende Rastausnehmung 4 und einen Rastvorsprung 5, welcher in die Rastausnehmung 4 einführbar ist.

Die Rastausnehmung 4 weist, wie insbesondere aus Fig. 4 ersichtlich ist, eine Hinterschneidung 6 auf. Am Rastvorsprung 5 ist eine korrespondierende Rastnase 7 ausgebildet.

Die Rastausnehmung 4 wird nach außen hin begrenzt von einer Seitenwand 8, welche verhältnismäßig kräftig ausgebildet ist. Die gegenüberliegende Seitenwand 9 der Rastausnehmung 4 ist im Querschnitt schwächer ausgebildet, so daß beim Einführen des Rastvorsprungs 5 die Seitenwand 8 starr bleibt, während sich die Rastausnehmung 4 durch eine Deformation der Seitenwand 9 öffnen kann. Diese Deformation wird unterstützt durch eine an der Unterseite der Seitenwand 8 vorgesehene Eindellung 10.

Der Längsschlitz 2 ist so gegen die radiale Richtung des Hüllwellrohres versetzt eingebracht, daß die Schnittfläche 11 mit der Außenseite der Wand 1 im Bereich der Rastnase 7 einen spitzen Winkel bildet, während zwischen Schnittfläche 11 und Innenwand ein verhältnismäßig stumpfer Winkel entsteht.

Der Längsschlitz 2 ist in einer im Querschnitt V-fömigen Längsvertiefung 12 angeordnet, welche derart asymmetrisch ist, daß der eine V-Schenkel 13 flacher und der andere V-Schenkel 14 steiler verläuft. Der Längsschlitz 2 liegt dabei nicht genau im Tal der V-Vertiefung 12, sondern gegen dieses zum flacher verlaufenden V-Schenkel 13 hin versetzt, so daß durch diese Anordnung des Schlitzes 2 beim Einbringen desselben die Rastnase 7 mit der vorstehend beschriebenen Winkelgestaltung entsteht.

An den steileren V-Schenkel schließt sich eine im Querschnitt U-förmige Ausbauchung 15 an. Der außenliegende U-Schenkel 16 der Ausbauchung 15 geht mit einem verhältnismäßig flachen Winkel in die Wandung 1 über.

Nach der Herstellung und dem Einbringen des Längsschlitzes 2 weist das erfindungsgemäße Hüllwellrohr die in Fig. 2 dargestellte Querschnittsform auf. Zum Einbringen eines Kabels 17 wird das Hüllwellrohr unter Verbreiterung des Schlitzes 2 aufgespreizt, was z. B. durch einen entsprechenden Leerdorn bewerkstelligt werden kann. Das Kabel 17 kann dann, wie in Fig. 3 dargestellt, eingefügt werden, wobei das Ende des V-Schenkels 13 und das stumpfe untere Ende der Rastnase 7 am Kabel beim kontinuierlichen Einlegen desselben entlangschleifen. Dabei ist ein Abschleifen des Endes des Schenkels 13 ebenso unkritisch wie dasjenige des stumpfen unteren Teils der Rastnase 7, da diese Teile zur Rastung und Dichtung nicht beitragen.

Wenn das Kabel 17 in dem Hüllwellrohr liegt, erfolgt das Verschließen des Schlitzes 2 durch Einrasten. Dieser Vorgang ist insbesondere in den Fig. 4 und 5 veranschaulicht. Aus Fig. 4 wird deutlich, daß durch die runde Ausgestaltung der oberen Außenkante 18 der Rastausnehmung 4 und der inneren Unterkante 19 des Rastvorsprungs 5 ein glattes, problemloses Einführen des Rastvorsprungs 5 in die Rastausnehmung möglich ist. Dabei wird die Seitenwand 9 elastisch nach außen gebogen und die Rastnase 7 greift in die Hinterschneidung 8, worauf die ausgelenkte Seitenwand 9 aufgrund ihrer Eigenelastizität wieder in Richtung auf ihre Ausgangslage zurückgeht. Im eingerasteten Zustand, wie er in Fig. 5 dargestellt ist, liegt der Schenkel 13 nun von innen am Schenkel 16 an und drückt elastisch gegen diesen, wodurch der Anpressdruck im oberen Bereich der Rastausnehmung 4 erhöht und die Dichtung zusätzlich verbessert wird. Dies wird durch die Geometrie des unteren Endes des Rastvorsprungs 5 unterstützt. Der Schlitz 2 ist damit nach außen zuverlässig überbrückt und geschlossen.

**Patentansprüche**

1. Hüllwellrohr aus Kunststoff für die Elektroinstallation mit kreisförmigen Querschnitt und mit einem seitlichen Längsschlitz (2), wobei entlang des Längsschlitzes (2) eine die beiden Schlitzränder lösbar verbindende Rastnase (7) und Rastausnehmung (4) vorgesehen ist, dadurch gekennzeichnet, daß eine im Querschnitt asymmetrische V-förmige Längsvertiefung (12) vorgesehen ist und der untere Längsschlitz (2) zur Ausbildung der Rastnase (7) in der V-Spitze zum flacher verlaufenden Schenkel (13) hin versetzt angebracht ist, und die außenliegende seitliche Begrenzungswand (8) der im Querschnitt rechteckigen Rastausnehmung (4) stärker ausgebildet ist als die innenliegende seitliche Begrenzungswand (9).

2. Hüllwellrohr nach Anspruch 1, <u>dadurch gekennzeichnet, daß</u> der Längsschlitz (2) so gegen die radiale Richtung geneigt in die Wandung (1) eingebracht ist, daß zwischen der Schnittfläche (11) und der Außenwand der Längsvertiefung (12) ein spitzer Winkel ausgebildet ist.

3. Hüllwellrohr nach Anspruch 1, <u>dadurch gekennzeichnet, daß</u> die steilere Seitenwand (14) der Längsvertiefung (12) gleichzeitig die Seitenwand einer sich anschließenden, im Querschnitt etwa U-förmigen Längsausbauchung (15) bildet.

## Claims

1. Corrugated jacket tube of synthetic plastics material for electrical installation, having a circular cross-section and having a lateral longitudinal slit (2), there being provided along the longitudinal slit (2) a catch projection (7) and catch cut-out (4) which separably connects the two edges of the slit, characterised in that a cross-sectionally asymmetrical V-shaped longitudinal depression (12) is provided while the bottom longitudinal slit (2) is for construction of the projection (7) offset in its disposition in the tip of the V towards the flatter arm (13), the outer lateral boundary wall (8) of the cross-sectionally rectangular cut-out (4) being thicker than the inner lateral boundary wall (9).

2. Corrugated jacket tube according to Claim 1, characterised in that the longitudinal slit (2) is incorporated into the wall (1) and is so inclined in relation to the radial direction that an acute angle is formed between the cutting surface (11) and the outer wall of the longitudinal depression (12).

3. Corrugated jacket tube according to Claim 1, characterised in that the steeper side wall (14) of the longitudinal depression (12) is at the same time the side wall of an adjacent cross-sectionally substantially U-shaped longitudinal bulge (15).

## Revendications

1. Tube de gainage annelè en matière plastique destiné aux installations électriques, présentant une section circulaire et une fente longitudinale latérale (2), en prévoyant, le long de la fente longitudinale (2), un bec d'accrochage (7) et un évidement d'accrochage (4) reliant de manière détachable les deux bords de la fente, caractérisé en ce que on prévoit une cavité longitudinale (12) asymétrique présentant en section la forme d'un V, en ce que la fente longitudinale inférieure (2) est disposée avec décalage vers la branche (13) s'étendant à plat en vue de la formation du bec d'accrochage (7) dans la pointe du V et en ce que la paroi de limitation latérale s'étendant à l'extérieur (8) de l'évidement d'accrochage (4) présentant en section la forme d'un quadrilatère a une épaisseur supérieure à celle de la paroi de limitation (9) latérale s'étendant à l'intérieur.

2. Tube de gainage annelé selon la revendication 1, caractérisé en ce que la fente longitudinale (2) est disposée dans la paroi (1) avec une inclinaison telle par rapport à la direction radiale qu'il se forme un angle aigu entre la surface de coupure (11) et la paroi extérieure de l'évidement longitudinal (12).

3. Tube de gainage annelé selon la revendication 1, caractérisé en ce que la paroi latérale (14) la plus inclinée de la cavité longitudinale (12) constitue en même temps la paroi latérale d'un évasement longitudinal (15) présentant en section approximativement la forme d'un U.

0 114 213

Fig. 2

Fig. 3

Fig. 4

Fig. 5

Fig. 1

Fig. 6